# EUROPÄISCHE PATENTSCHRIFT

(11) **EP 1 577 078 B1**
(45) Veröffentlichungstag und Bekanntmachung des Hinweises auf die Patenterteilung: **29.04.2009**
(21) Anmeldenummer: 04024834.6
(22) Anmeldetag: 19.10.2004
(51) Int. Cl.: B29C 65/40, B05C 17/005, B29C 65/10, B29C 47/88

(54) **Handschweissgerät zum Verschweissen von Kunststoffwerkstücken**
Hand held welding tool for welding synthetic parts
Outil de soudage à main pour le soudage d'éléments en matière synthétique

(30) Priorität: 15.03.2004 DE 202004004147 U; 20.04.2004 DE 202004006405 U
(43) Veröffentlichungstag der Anmeldung: 21.09.2005
(73) Patentinhaber: Wegener International GmbH, 52074 Aachen (DE)
(72) Erfinder: Schmuck, Jan, 45145 Essen (DE)
(74) Vertreter: Paul, Dieter-Alfred

(56) Entgegenhaltungen:
- DE-C1- 3 833 677
- DE-C1- 4 119 137
- DE-U1- 20 110 173

## Beschreibung

Die Erfindung betrifft ein Handschweißgerät zum Verschweißen von Kunststoffwerkstücken mittels plastifiziertem Kunststoffmaterial entsprechend dem Oberbegriff des Anspruchs 1.

Solche Schweißgeräte sind beispielsweise aus der DE 31 31 695 A1, DE 42 36 281 C2, DE 38 35 251 A2 und des gattungsbildenden DE 41 19 137 C1 bekannt. Sie werden zum Verschweißen von Kunststoffplatten oder -rohren verwendet. Im allgemeinen weisen sie eine Antriebseinrichtung ähnlich einer Handbohrmaschine mit einem elektrischen Antriebsmotor und einem Getriebe auf, auf dessen Abtrieb ein Vorsatzgerät aufgesetzt ist. Im wesentlichen in Längsrichtung durch dieses Vorsatzgerät geht ein Durchgangskanal, der einen nach außen offenen Einzug für das Einführen eines Drahtes aus thermoplastischem Kunststoffmaterial und einen als Schweißschuh ausgebildeten Ausgang für das plastifizierte Kunststoffmaterial aufweist. Der Durchgangskanal bildet über einen wesentlichen Abschnitt eine Fördereinrichtung, in dem in den Durchgangskanal eine Förderschraube eingesetzt ist, die von der Antriebseinrichtung in Drehbewegung versetzbar ist. In einem ersten Förderabschnitt wird der Draht beim Einführen über den Eingang von der Schraubverzahnung der Förderschraube erfaßt und in axialer Richtung parallel zu deren Achse eingezogen und transportiert. Danach wird der Draht in einer Zerkleinerungseinrichtung zerstückelt, so daß er in granulierter Form in die sich anschließende Plastifiziereinrichtung eintritt. Dort setzt sich die Förderschraube in Form einer Förderschnecke in dem Durchgangskanal fort. Die Plastifiziereinrichtung ist mit einer Heizeinrichtung versehen, die den Förderkanal umgibt und für eine Erhitzung des Kunststoffmaterials auf eine solche Temperatur sorgt, daß es beim Durchlaufen durch die Plastifiziereinrichtung schmilzt und in plastifiziertem Zustand aus dem Ausgang des Durchgangskanals ausgestoßen wird.

Bei dem Handschweißgerät nach dem DE 298 18 757.4 U ist auf die Zerkleinerungseinrichtung und die Förderschnecke verzichtet worden, so daß der Draht unzerkleinert in die Plastifiziereinrichtung befördert und dort zum Schmelzen gebracht wird, wobei der noch nicht plastifizierte Drahtabschnitt wie ein Kolben auf das schon plastifizierte Kunststoffmaterial wirkt und es durch stetiges Nachrücken, bewirkt durch die Fördereinrichtung, aus dem Schweißschuh ausstößt.

In der DE 201 10 173 U1 ist ein Handschweißgerät offenbart, bei dem der bisher verwendete bürstenbehaftete Kollektormotor als Antriebsmotor für die Fördereinrichtung durch einen bürsten- und kollektorlosen Asynchronmotor ersetzt worden ist, der mit einer Frequenz von mehr als 300 Hz, bevorzugt 1000 Hz betrieben wird. Hierdurch soll sich das Leistungsgewicht erheblich reduzieren. Allerdings ist zur Drehzahlsteuerung ein raumaufwendiger Frequenzumrichter notwendig, der bei der praktischen Ausführung des in der DE 201 10 173 U1 beschriebenen Handschweißgeräts in einem separaten Gehäuse untergebracht ist, das mit dem Handschweißgerät nur über ein Spezialkabel verbunden ist. Dies macht die Handhabung des Handschweißgeräts umständlich.

Handschweißgeräte dieser Art sind gewöhnlich mit einer Heißlufterzeugungseinrichtung versehen, über die mittels eines Gebläses angesaugte Luft durch ein elektrisches widerstandsheizelement erhitzt und dann im Bereich des Ausgangs des Durchgangskanal ausgestoßen wird, um die zu verschweißenden Kunststoffwerkstücke im Bereich der vorgesehenen Schweißnaht vorzuwärmen. In vielen Fällen ist das Gebläse nicht Teil des Handschweißgerätes, so daß die Luft über einen Schlauch von einem separaten Gebläse zu dem Heizgerät zugeführt werden muß. In der DE 41 19 137 C1 ist jedoch das als Radialgebläse ausgebildete Gebläse an der Rückseite des Handschweißgerätes angeordnet und wird von dem Antriebsmotor über eine welle angetrieben.

Für die Erhitzung der Luft in der Heißlufterzeugungseinrichtung auf eine für die Vorheizung der Schweißnaht ausreichende Temperatur ist ein erheblicher Energieaufwand in Form von Stromaufnahme des Heizelements notwendig. Der Erfindung liegt die Aufgabe zugrunde, ein Handschweißgerät der eingangs genannten Art so auszubilden, daß der Energieaufwand für die Erhitzung der Luft geringer gehalten werden kann als bisher.

Diese Aufgabe wird erfindungsgemäß dadurch gelöst, daß der Ansaugkanal derart ausgebildet ist, daß die beim Betrieb des Gebläses durch ihn strömende Ansaugluft an wenigstens einer Komponente des Handschweißgeräts vorbeistreicht, die sich während des Betriebs des Handschweißgeräts erwärmt. Grundgedanke der Erfindung ist es, die Ansaugluft des Gebläses vorzuwärmen, und zwar erfindungsgemäß durch wenigstens eine Komponente des Handschweißgeräts, die sich beim Betrieb ohnehin erhitzt, insbesondere wenn es sich um eine Komponente handelt, die sogar gekühlt werden muß. Auf diese Weise wird die Temperaturdifferenz zu der vorgegebenen Temperatur der durch die Heißlufterzeugungseinrichtung erhitzten Luft und damit die von dem Widerstandsheizelement zu erzeugende Heizleistung verringert mit der Folge, daß der Energieaufwand für das Handschweißgerät herabgesetzt wird. Dabei ist von besonderem Vorteil, daß die Reduzierung nicht mit erheblichem zusätzlichen Bauaufwand verbunden ist. Teilweise kann sogar auf eine ansonsten notwendige zusätzliche Kühlung der von der Ansaugluft umströmten Komponente verzichtet werden.

Als eine Komponente, die der Ansaugluft ausgesetzt wird, kommt insbesondere der Antriebsmotor in Frage. Zu dessen Kühlung war bisher ein zusätzliches Lüfterad erforderlich (vgl. DE 41 19 137 Cl). Auf dieses Lüfterad kann verzichtet werden, wenn die Ansaugluft so geführt wird, daß sie an dem Antriebsmotor vorbeistreichen kann. Dies schließt jedoch nicht aus, daß zusätzlich ein Lüfterad vorhanden ist, das die Kühlung des Antriebsmotors unterstützt. Der Antriebsmotor ist vorzugsweise in einem Motorgehäuse angeordnet, das Luftein- und Luftauslaßöffnungen derart vorgesehen hat, daß Ansaugluft für das Gebläse an dem Antriebsmotor vorbeiströmt.

Die wenigstens eine Komponente zur Vorwärmung der Ansaugluft des Gebläses kann auch zumindest ein wärmeerzeugendes elektronisches Bauteil sein, beispielsweise Leistungshalbleiter zum Schalten von Heizeinrichtungen des Schweißgeräts und/oder Regeleinrichtungen zur Temperaturregelung und/oder ein Frequenzumrichter oder Regler für die Drehzahlsteuerung des Antriebsmotors. Dabei kann es zweckmäßig sein, die vorgenannten Bauteile nicht direkt der Ansaugluft auszusetzen, sondern hierfür einen Kühlkörper zu nehmen, an dem die Ansaugluft vorbeistreift und die mit dem Bauteil bzw. den Bauteilen in wärmeleitender Verbindung steht, so daß der Kühlkörper im Betrieb von den Bauteilen erwärmt wird. Der Kühlkörper kann dann so ausgebildet sein, daß er von der Ansaugluft umströmte Kühlvorsprünge, beispielsweise Kühlrippen, aufweist. Zweckmäßigerweise bildet dann der Kühlkörper den Abschnitt eines Ansaugkanals, vorzugsweise unmittelbar an der Saugseite des Gebläses anschließend.

Nach einem weiteren Merkmal der Erfindung ist vorgesehen, daß das Gebläse einen eigenen Antriebsmotor aufweist, der in dem Ansaugkanal derart angeordnet ist, daß er im Betrieb von der Ansaugluft des Gebläses umströmt ist. Dabei kann vorgesehen sein, daß das Gebläse einem Griffgehäuse des Handschweißgeräts zugeordnet ist. Das Gebläse kann als ein Radialgebläse mit einer sich quer zur Längsachse des Handschweißgeräts erstreckenden Drehachse ausgebildet sein. Aber auch ein Axialgebläse kommt in Frage. Das Gebläse sollte ein Gebläsegehäuse aufweisen, das von dem Griffgehäuse gebildet ist.

Schließlich ist nach der Erfindung vorgesehen, daß der Antriebsmotor als elektrischer bürstenloser Permanentmagnetmotor ausgebildet ist, der über Frequenzumrichter drehzahlgesteuert ist. Sowohl der Antriebsmotor als auch der Frequenzumrichter sollten dabei innerhalb des Ansaugkanals liegen, da sie sich im Betrieb erwärmen und diese Wärme dann über die Ansaugluft unter deren Aufheizung abgeführt und in der Heißlufterzeugungseinrichtung genutzt werden kann.

In der Zeichnung ist die Erfindung anhand eines Ausführungsbeispiels näher veranschaulicht. Es zeigen:
- Figur 1: die linke Seitenansicht des erfindungsgemäßen Handschweißgerätes;
- Figur 2: die rechte Seitenansicht des erfindungsgemäßen Handschweißgerätes nach Drehung der Ansicht gemäß Figur 1 um 180°;
- Figur 3: das Gebläse für die Heißlufterzeugungseinrichtung mit Elektronikkomponente von der Saugseite her gesehen;
- Figur 4: das Gebläse gemäß Figur 3 von der Druckseite her gesehen.

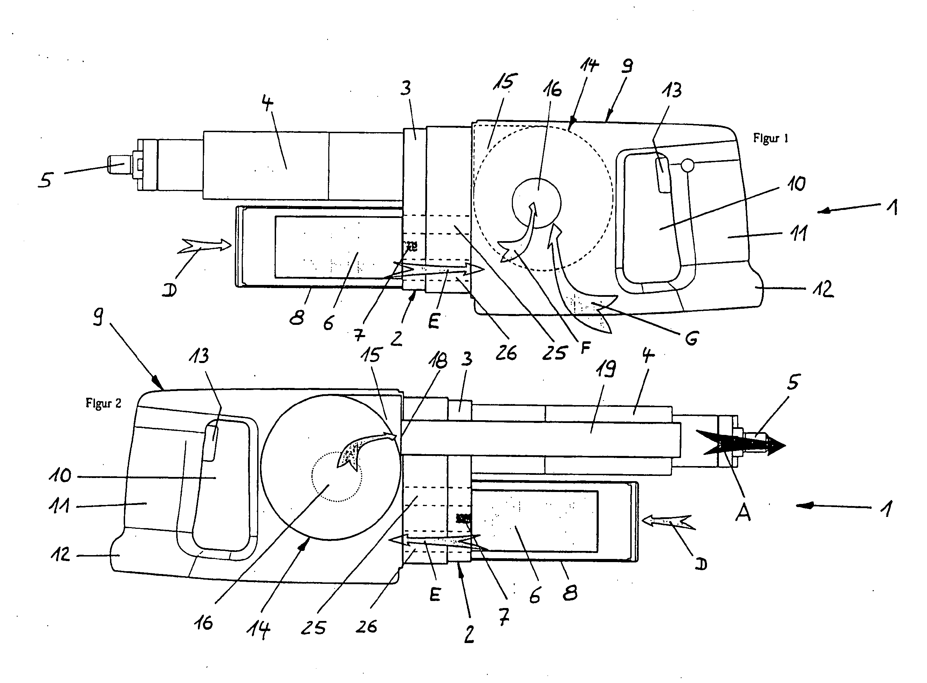

Das in den Figuren 1 und 2 dargestellte Handschweißgerät 1 weist als zentrales Teil ein Getriebe 2 mit einem Getriebegehäuse 3 auf. Das Getriebegehäuse 3 besteht aus Metall und nimmt einen Zahnradsatz sowie ein Zahnriemengetriebe auf.

An der Vorderseite des Getriebes 2 ist oben eine Plastifiziereinrichtung 4 angeflanscht, die im wesentlichen eine - gestufte - Zylinderform hat. Koaxial zur Längsachse der Plastifiziereinrichtung 4 erstreckt sich ein Durchgangskanal, in dem in üblicher weise eine Förderschnecke angeordnet ist. Die wandung des Durchgangskanals ist von einer Heizmanschette umgeben, die mit einer elektrischen Widerstandsheizung versehen ist und im Betrieb für die Aufheizung des durch den Durchgangskanal mittels der Förderschnecke transportierten Kunststoffmaterials bis zu dessen Plastifizierung sorgt. Das Kunststoffmaterial wird in Drahtform über eine hier nicht näher dargestellte Einzugsöffnung in die Plastifiziereinrichtung 4 eingezogen. Beim Schweißvorgang wird das in die Plastifiziereinrichtung 4 plastifizierte Kunststoffmaterial am freien, als Schweißschuh 5 ausgebildeten Ende ausgestoßen.

Ebenfalls an der Vorderseite des Getriebes 2, jedoch unterhalb der Plastifiziereinrichtung 4, ist ein Antriebsmotor 6 in Form eines elektrischen bürstenlosen Permanentmagnetmotors angeflanscht. Dessen Abtriebswelle 7 ragt in das Getriebe 2 hinein. Das Getriebe 2 überträgt die Drehbewegung der Abtriebswelle 7 nach oben auf die Förderschnecke in der Plastifiziereinrichtung 4 und sorgt dort bei Einschalten des Antriebsmotors 6 für deren Drehbewegung. Der Antriebsmotor 6 ist außenseitig von einem zylindrischen Motorgehäuse 8 umgeben, das ebenfalls an dem Getriebe 2 angeflanscht ist und an der vorderen Stirnseite Lufteintrittsöffnungen aufweist. Das Motorgehäuse 8 hat einen freien Abstand zu der Außenseite der Plastifiziereinrichtung 4.

An der Rückseite des Getriebegehäuses 3 ist ein Griffgehäuse 9 angebracht. Es besteht aus einem Kunststofformteil, das oben- und untenseitig im wesentlichen gerade ausgebildet ist. Im hinteren Bereich weist das Griffgehäuse 9 eine geschlossene Grifföffnung 10 auf, die hintenseitig von einem Handgriff 11 begrenzt wird, der beidseitig von dem Griffgehäuse 9 eingefaßt ist. Der Handgriff 11 hat hintenseitig im unteren Bereich einen Vorsprung 12, der eine zusätzliche Handstütze bildet. Im Bereich der Grifföffnung 10 steht von dem Handgriff 11 ein Betätigungsknopf 13 vor, der mit einem Schalter zum Ein-und Ausschalten des Antriebsmotors 6 versehen ist.

In das Griffgehäuse 9 integriert, wenn auch auf der rechten Seite nach außen vorstehend, ist ein Radialgebläse 14. Es hat ein Gebläsegehäuse 15, in dem ein von einem Elektromotor 16 angetriebenes Gebläserad 17 angeordnet ist. Das Gebläsegehäuse 15 ist integraler Bestandteil des Griffgehäuses 9.

An den Ausgang 18 des Gebläsegehäuses 15 schließt sich ein Luftheizrohr 19 an, das parallel und auf gleicher Höhe zu der Plastifiziereinrichtung 4 bis in die Nähe des Schweißschuhs 5 verläuft und dort in einer freien Öffnung endet. In das Luftheizrohr 19 ist eine Luftheizelement in Form einer Widerstandsheizung eingebaut, die die aus dem Radialgebläse 14 und deren Ausgang 18 ausströmende Luft aufheizt und entsprechend dem Pfeil A ausstößt.

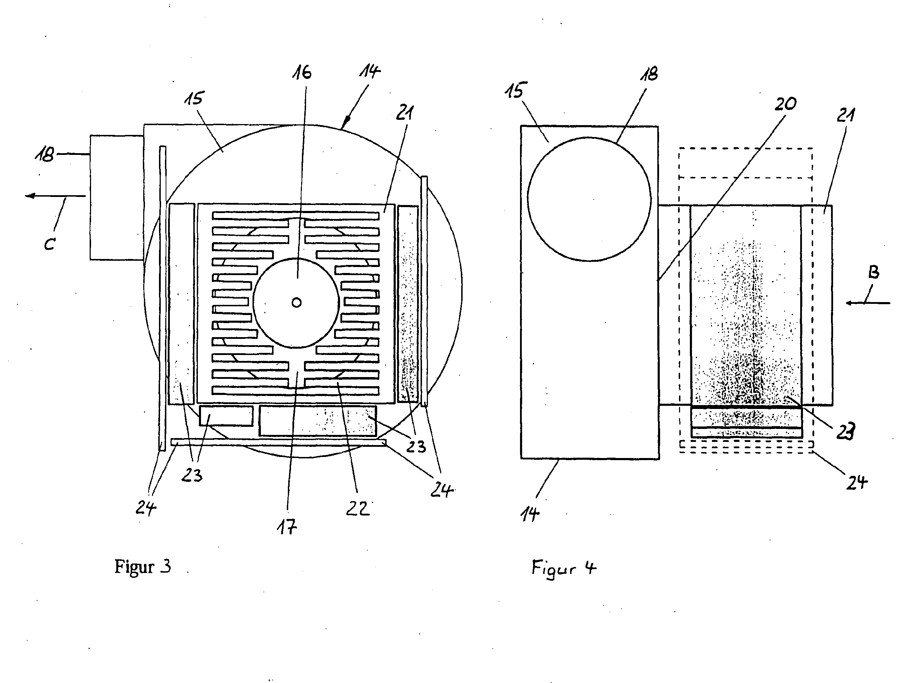

In den Figuren 3 und 4 ist das Radialgebläse 14 mit dem Gebläsegehäuse 15, dem Elektromotor 16, dem Gebläserad 17 und dem Ausgang 18 separat dargestellt. Auf die Saugseite 20 des Gebläsegehäuses 15 ist ein im Querschnitt quadratischer Kühlkörper 21 aufgesetzt, der einen Zuluftkanal für das Radialgebläse 14 bildet. Der Kühlkörper 21 besteht aus einem gut wärmeleitfähigen Material, beispielsweise Aluminium. Von den beiden sich gegenüberstehenden vertikalen Innenseiten stehen eine Vielzahl von Kühlrippen - beispielhaft mit 22 bezeichnet - vor, die bis in die Nähe des Elektromotors 16 reichen. Im Betrieb strömt die durch das Radialgebläse 14 angesaugte und demgemäß in den Kühlkörper 21 einströmende Luft (siehe Pfeil B) an den Kühlrippen 22 vorbei und wird am Ausgang 18 (siehe Pfeil C) in das Luftheizrohr 19 (Figur 2) ausgestoßen.

An den beiden Vertikalseiten und an der Unterseite des Kühlkörpers 21 sind Elektronikkomponenten in unmittelbarer Nähe zu und/oder an dem Kühlkörper 21 anliegend angeordnet. Hierbei handelt es sich vor allem um solche Elektronikkomponenten 23, die sich im Betrieb des Handschweißgerätes 1 stark erwärmen, wie beispielsweise die Leistungshalbleiter zum Schalten der Heizelemente der Plastifiziereinrichtung 4 und dem Heizelement im Luftheizrohr 19, die Temperaturregelelektronik für diese Heizelemente sowie den Regler für die Drehzahlsteuerung des Antriebsmotors 6. Die Elektronikkomponenten 23 sind auf Leiterplatten 24 montiert, die in dem Griffgehäuse 9 (vgl. Figuren 1 und 2) fixiert sind. Im Betrieb geben die Elektronikkomponenten 23 ihre wärme an den Kühlkörper 21 ab. Die an den Kühlrippen 22 vorbeistreifende Ansaugluft nimmt die Wärme auf. Auf diese weise werden die Elektronikkomponenten 23 gekühlt und gleichzeitig die Ansaugluft entsprechend aufgewärmt. Der Elektromotor 16 ragt in den Kühlkörper 21 hinein, so daß auch er von der Ansaugluft umströmt und die von ihm erzeugte Wärme an die Ansaugluft abgeführt wird.

Wie wiederum aus den Figuren 1 und 2 zu ersehen ist, ist der Innenraum des Motorgehäuses 8 über Durchströmkanäle 25, 26 in dem Getriebe 2 mit dem Innenraum des Griffgehäuses 9 verbunden. Im Betrieb wird deshalb Luft über die Ansaugöffnungen (Pfeil D) in der Stirnseite des Motorgehäuses 8 in dieses eingesaugt und strömt an dem Antriebsmotor 6 vorbei. Die Ansaugluft gelangt dann über die Durchströmkanäle 25, 26 (Pfeil E) zur Saugseite des Radialgebläses 14 (Pfeil F) und strömt dort in den Kühlkörper 21 (vgl. Figuren 3 und 4) ein. Im Betrieb wird die durch den Antriebsmotor 6 erzeugte Wärme von der vorbeiströmenden Ansaugluft aufgenommen. Hierdurch werden der Antriebsmotor 6 gekühlt und die Ansaugluft aufgewärmt.

Das Griffgehäuse 9 hat auf der linken Seite einen hier nicht näher dargestellten Lufteinlaß, über die von außen zusätzliche Ansaugluft (Pfeil G) parallel zu der Ansaugluft über das Motorgehäuse 8 in den Kühlkörper 21 angesaugt und dort erwärmt wird. Durch die Vorwärmung der Ansaugluft einerseits an dem Antriebsmotor 6 und andererseits an dem Kühlkörper 21 hat die an dem Ausgang 18 in das Luftheizrohr 19 ausströmende Luft eine erhöhte Temperatur, so daß das darin enthaltende Heizelement entsprechend geringere Heizleistungen aufzubringen braucht, um die Lufttemperatur auf einen vorbestimmten Wert zu bringen.

Auf der Oberseite des Griffgehäuses 9 sind - was hier nicht näher dargestellt ist - weitere Bedienungselemente in Form einer Folientastatur sowie Displays für die Anzeige beispielsweise von Temperaturen und Drehzahl eingelassen.

Die Handhabung des Handschweißgerätes 1 geschieht in der Weise, daß es mit der einen Hand an dem Motorgehäuse 8 unterstützt wird, indem das Motorgehäuse 8 von unten gegriffenen wird, und mit der anderen Hand der Griff 11 umfaßt wird. Auf diese Weise ist das Handschweißgerät 1 präzise und bequem handhabbar. Durch die Unterbringung der Elektronikkomponenten 23 und des Radialgebläses 14 in dem Griffgehäuse 9 ist das Handschweißgerät 1 außerordentlich kompakt und läßt einen freien Blick auf die Schweißstelle zu.

## Patentansprüche

1. Handschweißgerät (1) zum Verschweißen von Kunststoffwerkstücken mittels plastifiziertem Kunststoffmaterial, mit einer Fördereinrichtung zur Förderung des Kunststoffmaterials durch eine Plastifiziereinrichtung (4) zu einem Schweißschuh (5), wobei die Fördereinrichtung von einem elektrischen Antriebsmotor (6) angetrieben ist, sowie mit einer Heißlufterzeugungseinrichtung (14, 19) für die Erzeugung und Zufuhr von Heißluft in den Bereich des Schweißschuhs (5) für das plastifizierte Kunststoffmaterial, wobei die Heißlufterzeugungseinrichtung (14, 19) ein Gebläse (14) aufweist, dessen Saugseite mit einem Ansaugkanal verbunden ist, **dadurch gekennzeichnet, daß** der Ansaugkanal derart ausgebildet ist, daß die beim Betrieb des Gebläses (14) durch ihn strömende Ansaugluft an wenigstens einer Komponente des Handschweißgeräts (1) vorbeistreicht, die sich während des Betriebs des Handschweißgeräts (1) erwärmt.

2. Handschweißgerät nach Anspruch 1, **dadurch gekennzeichnet, daß** eine Komponente der Antriebsmotor (6) ist.

3. Handschweißgerät nach Anspruch 2, **dadurch gekennzeichnet, daß** der Antriebsmotor (6) in einem Motorgehäuse (8) angeordnet ist, das Luftein- und Luftauslaßöffnungen derart vorgesehen hat, daß Ansaugluft für das Gebläse (14) an dem Antriebsmotor (6) vorbeiströmt.

4. Handschweißgerät nach einem der Ansprüche 1 bis 3, **dadurch gekennzeichnet, daß** die wenigstens eine Komponente zumindest ein wärmeerzeugendes elektronisches Bauteil (23) ist.

5. Handschweißgerät nach Anspruch 4, **dadurch gekennzeichnet, daß** das zumindest eine Bauteil ein Leistungshalbleiter zum Schalten von Heizeinrichtungen des Handschweißgeräts (1) und/oder Regeleinrichtungen zur Temperaturregelung dieser Heizeinrichtungen und/ oder ein Frequenzumrichter oder Regler für die Drehzahlsteuerung des Antriebsmotors (6) ist bzw. sind.

6. Handschweißgerät nach einem der Ansprüche 1 bis 5, **dadurch gekennzeichnet, daß** eine Komponente ein Kühlkörper (21) ist, an dem wenigstens ein Bauteil (23) in wärmeleitender Verbindung angeordnet ist, welches den Kühlkörper (21) währen des Betriebs des Handschweißgeräts (1) erwärmt.

7. Handschweißgerät nach Anspruch 6, **dadurch gekennzeichnet, daß** der Kühlkörper (21) von der Ansaugluft im Betrieb umströmte Kühlvorsprünge (22) aufweist.

8. Handschweißgerät nach Anspruch 6 oder 7, **dadurch gekennzeichnet, daß** der Kühlkörper (21) einen Abschnitt des Ansaugkanals bildet.

9. Handschweißgerät nach Anspruch 8, **dadurch gekennzeichnet, daß** der Kühlkörper (21) unmittelbar an der Saugseite des Gebläses (14) angeordnet ist.

10. Handschweißgerät nach einem der Ansprüche 1 bis 9, **dadurch gekennzeichnet, daß** das Gebläse (14) einen eigenen Antriebsmotor (16) aufweist, der in dem Ansaugkanal derart angeordnet ist, daß er im Betrieb von der Ansaugluft umströmt ist.

11. Handschweißgerät nach einem der Ansprüche 1 bis 10, **dadurch gekennzeichnet, daß** das Gebläse (14) einem Griffgehäuse (9) des Handschweißgeräts (1) zugeordnet ist.

12. Handschweißgerät nach einem der Ansprüche 1 bis 11, **dadurch gekennzeichnet, daß** das Gebläse als Radialgebläse (14) mit einer sich quer zur Längsachse des Handschweißgeräts (1) erstreckenden Drehachse ausgebildet ist.

13. Handschweißgerät nach Anspruch 11, **dadurch gekennzeichnet, daß** das Gebläse (14) ein Gebläsegehäuse (15) aufweist, das von dem Griffgehäuse (9) gebildet ist.

14. Handschweißgerät nach einem der Ansprüche 1 bis 13, **dadurch gekennzeichnet, daß** der Antriebsmotor (6) als bürsten- und kollektorloser Asynchronmotor ausgebildet ist, der über einen Frequenzumrichter drehzahlgesteuert ist.

## Claims

1. A hand-held welding torch (1) for welding synthetic workpieces by means of plasticised synthetic material, having a conveyance device for conveying the synthetic material through a plasticising device (4) to a welding shoe (5), the conveyance device being driven by an electric drive motor (6), and having a hot air generating device (14, 19) for the generation and supply of hot air into the region of the welding shoe (5) for the plasticised synthetic material, the hot air generating device (14, 19) having a blower (14) the intake side of which is connected to an intake duct, **characterised in that** the intake duct is designed such that during operation of the blower (14) intake air flowing through the latter sweeps past at least one component of the hand-held welding torch (1) which heats up during operation of the hand-held welding torch (1).

2. The hand-held welding torch according to Claim 1, **characterised in that** one component is the drive motor (6).

3. The hand-held welding torch according to Claim 2, **characterised in that** the drive motor (6) is disposed in a motor housing (8) which is provided with air inlet and air outlet openings such that intake air for the blower (14) flows past the drive motor (6).

4. The hand-held welding torch according to any of Claims 1 to 3, **characterised in that** the at least one component is at least one heat-generating electronic component (23).

5. The hand-held welding torch according to Claim 4, **characterised in that** the at least one component is or are a power semiconductor for the switching of heating devices of the hand-held welding torch (1) and/or control devices for adjusting the temperature of these heating devices and/or a frequency converter or regulator for controlling the motor speed of the drive motor (6).

6. The hand-held welding torch according to any of Claims 1 to 5, **characterised in that** one component is a cooling element (21) which is disposed with a heat-conducting connection on the at least one component (23) which heats up the cooling element (21) during operation of the hand-held welding torch (1).

7. The hand-held welding torch according to Claim 6, **characterised in that** the cooling element (21) has cooling projections (22) around which intake air flows during operation.

8. The hand-held welding torch according to Claim 6 or 7, **characterised in that** the cooling element (21) forms a section of the intake duct.

9. The hand-held welding torch according to Claim 8, **characterised in that** the cooling element (21) is disposed directly on the intake side of the blower (14).

10. The hand-held welding torch according to any of Claims 1 to 9, **characterised in that** the blower (14) has its own drive motor (16) which is disposed in the intake duct such that during operation intake air flows around it.

11. The hand-held welding torch according to any of Claims 1 to 10, **characterised in that** the blower (14) is assigned to a grip housing (9) of the hand-held welding torch (1).

12. The hand-held welding torch according to any of Claims 1 to 11, **characterised in that** the blower is in the form of a radial blower (14) with an axis of rotation extending laterally to the longitudinal axis of the hand-held wel ding torch (1).

13. The hand-held welding torch according to Claim 11, **characterised in that** the blower (14) has a blower housing (15) which is formed by the grip housing (9).

14. The hand-held welding torch according to any of Claims 1 to 13, **characterised in that** the drive motor (6) is in the form of a brush- or collector-less asynchronous motor the motor speed of which is controlled by a frequency converter.

## Revendications

1. Appareil de soudure manuel (1) pour soudure de produits de matière plastique avec du matériel plastique plastifié, avec un convoyeur pour le convoiement de matériel plastique par une installation de plastification (4) jusqu'à une chaussure de soudure (5), pendant que le convoyeur est propulsé par un moteur de propulsion électrique (6), de même qu'une installation de production d'air chaud (14, 19) pour la production et l'approvisionnement d'air chaud dans le domaine de la chaussure à soudure (5) pour le matériel plastique plastifié, pendant que l'installation d'air chaud (14, 19) montre une soufflerie (14), dont le côté d'aspiration est connecté à un canal d'aspiration qui est **caractérisée en ce que** le canal d'aspiration est formé de telle façon, que l'air chaud passant par la soufflerie (14) pendant son fonctionnement touche au moins une des composantes de l'appareil de soudure manuel, qui s'échauffe pendant le fonctionnement de l'appareil de soudure (1) manuel.

2. Appareil de soudure manuel selon la revendication 1, **caractérisée en ce que** une composante est le moteur de propulsion (6).

3. Appareil de soudure manuel selon la revendication 2, **caractérisée en ce que** le moteur de propulsion (6) est placé dans un logement de moteur (8), qui a prévu une ouverture de prise et d'échappement d'air de telle façon que l'air d'aspiration pour la soufflerie (14) passe à côté du moteur de propulsion (6).

4. Appareil de soudure manuel selon les revendications 1 à 3, **caractérisée en ce que** au moins une des composantes est un élément électrique producteur d'air chaud (23).

5. Appareil de soudure manuel selon la revendication 4, **caractérisée en ce que** au moins un élément est, resp. sont un semi-conducteur de performance pour l'enclenchement des installations de chauffage de l'appareil de soudure manuel (1) et/ou des installations de régulation de régulation de la température de ces installations de chauffage et/ou un mutateur de fréquence ou un régulateur pour le renchérissement de régime du moteur de propulsion (6).

6. Appareil de soudure manuel selon les revendications 1 à 5, **caractérisée en ce que** au moins une des composantes est un corps de refroidissement (21), auquel au moins un élément est monté en relation de conduite de chaleur qui réchauffe le corps de refroidissement (21) pendant le fonctionnement de l'appareil de soudure manuel (1).

7. Appareil de soudure manuel selon la revendication 6, **caractérisée en ce que** le corps de refroidissement (21) montre des avances de refroidissement entourant de l'air d'aspiration pendant le fonctionnement.

8. Appareil de soudure manuel selon les revendications 6 ou 7, **caractérisée en ce que** le corps de refroidissement (21) fait partie d'un segment du canal d'aspiration.

9. Appareil de soudure manuel selon la revendication 8, **caractérisée en ce que** le corps de refroidissement (21) est directement disposé sur le côté d'aspiration de la soufflerie (14).

10. Appareil de soudure manuel selon une des revendications 1 à 9, **caractérisée en ce que** la soufflerie (14) a un moteur de propulsion (16) propre, qui est disposé de telle façon dans le canal d'aspiration qu'il est entouré d'air d'aspiration pendant le fonctionnement.

11. Appareil de soudure manuel selon une des revendications 1 à 10, **caractérisée en ce que** la soufflerie (14) est assignée à un logement de prise (9) de l'appareil de soudure manuel (1).

12. Appareil de soudure manuel selon une des revendications 1 à 11, **caractérisée en ce que** la soufflerie en tant que soufflerie radiale (14) est équipée d'un axe de rotation s'étendant en travers de l'axe longitudinale de l'appareil de soudure manuel.

13. Appareil de soudure manuel selon la revendication 11, **caractérisée en ce que** la soufflerie (14) ait un logement de soufflerie, qui est développé du logement de prise (9).

14. Appareil de soudure manuel selon les revendications 1 à 13, **caractérisée en ce que** le moteur de propulsion (6) est développé en tant que moteur asynchrone sans brosse et sans collecteur, qui est conduit par régime par un mutateur de fréquence.
